# EUROPÄISCHE PATENTSCHRIFT

(11) **EP 1 685 974 B1**
(45) Veröffentlichungstag und Bekanntmachung des Hinweises auf die Patenterteilung: **13.04.2016**
(21) Anmeldenummer: 06000365.4
(22) Anmeldetag: 10.01.2006
(51) Int. Cl.: H04N 1/32, B41M 3/14, B42D 25/45, B42D 25/30, B42D 25/328, G06K 19/06

(54) **Sicherheitsmarkierung und Verfahren zur Herstellung derselben**
Security marking and manufacturing process therefor
Marquage de sécurité et procédé de fabrication de ce dernier

(30) Priorität: 27.01.2005 DE 102005003839
(43) Veröffentlichungstag der Anmeldung: 02.08.2006
(73) Patentinhaber: Koenig & Bauer AG, 97080 Würzburg (DE)
(72) Erfinder: Veil, Jürgen, 01471 Steinbach (DE)

(56) Entgegenhaltungen:
- EP-A1- 1 547 772
- WO-A1-2004/026589
- WO-A2-2004/096570
- DE-A1- 2 910 176
- DE-A1- 10 057 641
- US-A- 1 968 625
- US-A- 4 841 903

## Beschreibung

Die Erfindung betrifft eine Sicherheitsmarkierung und ein Verfahren zur Herstellung einer Sicherheitsmarkierung nach dem CIT-Prinzip für bedruckte Flächen, wobei die Sicherheitsmarkierung ein zwei- oder dreidimensionales Bild ist, dessen Bildelemente in einer für das menschliche Auge nicht wahrnehmbaren Größe und Anordnung kodiert sind und nur mit Hilfe optischer Decoder sichtbar sind.
Unter Sicherheitsmarkierungen werden fälschungssichere, zumindest aber sehr schwer nachahmbare Kennzeichnungen an Waren/Produkten oder deren Verpackungen zur Authentifizierung der Waren/Produkte verstanden, deren Fehlen unerlaubte Nachahmungen oder Kopien (Fälschungen) offenbaren sollen. Dazu gehören Wasserzeichen, Logos, Seriennummern, Spezialfarben oder Hologrammbilder.
Die bekannten Sicherheitsmarkierungen bieten jedoch keinen ausreichenden Schutz vor Nachahmungen oder sind aufwendig in der Herstellung oder nicht überall einsetzbar. Darüber hinaus ist bei Verwendung der bisher üblichen Kennzeichnungen die Prüfung der Warenechtheit kompliziert und aufwendig. Es müssen entweder Teststücke untersucht werden oder Labortests zur Material- oder Bildanalyse durchgeführt werden. Die Ergebnisse sind oft unzuverlässig.

DE 29 10 176 A1 offenbart ein druckbares Kennzeichen aus fluoreszierendem Material für mehrfarbig bedruckte Flächen, das nach dem Aufbringen eines glänzenden Lacks nicht sichtbar ist.

Zur einfachen und schnellen Überprüfung der Produktechtheit vor Ort ist die Herstellung von Sicherheitsmarkierungen auf Warenverpackungen oder den Waren selbst nach dem CIT-Prinzip ("Concealed Image Technologies" oder "Verborgenbildtechnik") geeignet. Es handelt sich dabei um 2D- oder 3D-Bilder, die in bedruckten Flächen aufgrund der geringen Größe der Bildelemente und deren Anordnung für das menschliche Auge verborgen sind ("Hidden Images"). Diese Hidden Images können nicht oder nur mit hohem Aufwand reproduziert werden, da Scanner die kodierten Bildinformationen aufgrund ihrer geringen Größe (< 50 µm), veränderbaren Punkt- oder Linienfrequenz und variablen Ausrichtung nicht erfassen können. Zur Sichtbarmachung ist ein optischer Encoder (Linse) erforderlich, der nach dem Schlüssel-Schloß-Prinzip nur zum jeweiligen Hidden Image passt.
Bei 3D-CIT handelt es sich um geprägte oder mit Lasertechnik erzeugte Vertiefungen mit 1-30 µm Breite und 1-50 µm Tiefe, die durch ihre unterschiedlichen Reflexionswinkel Bildinformationen kodieren. Aus der WO 2004/096570 A2 ist ein Verfahren zur Herstellung geprägter 3D-Hidden Images bekannt. Die Bildinformationen sind an Linien mit einer Frequenz von 1000 L/ inch mit bestimmter Ausrichtung angeordnet. Der Einsatz von 3D-CIT ist jedoch nur bei Kunststoff- oder Metallfolien möglich und daher beschränkt.
2D-CIT-Bilder können mit verschiedenen Druckverfahren wie Offsetdruck, Tiefdruck oder Flexodruck erzeugt werden. Die für das Bedrucken beispielsweise der Produktverpackung erstellten Vorstufen-Bilddateien werden dabei von darauf spezialisierten Unternehmen pixel- oder zeilenweise so manipuliert, dass die Bildinformationen für die CIT-Sicherheitsmarkierung dem Auge verborgen bleiben. Zur Kodierung werden geringe Farbwert- oder Farbtondifferenzen zur umgebenden Fläche genutzt.
Nachteilig an den bekannten 2D-CIT-Verfahren ist, dass sie nur innerhalb von gerasterten Bilddaten angewendet werden können. In Volltonflächen, die für den Verpackungsdruck von großer Bedeutung sind, ist eine Implementierung der Hidden Images bisher nicht möglich.

Der Erfindung liegt daher die Aufgabe zugrunde, eine druckbare Sicherheitsmarkierung nach dem CIT-Prinzip zu schaffen, die mit geringem Aufwand an jeder beliebigen Stelle eines Bedruckstoffes, also auch in ungerasterten Flächen, implementierbar ist.

Erfindungsgemäß wird die Aufgabe durch eine Sicherheitsmarkierung mit den Merkmalen des 1. und 16. Anspruchs und durch ein Verfahren zur Herstellung einer solchen Sicherheitsmarkierung mit den Merkmalen des 2. Anspruches gelöst. Vorteilhafte Ausgestaltungen der erfindungsgemäßen Lösung sind Gegenstand der Unteransprüche.

Die Erfindung hat den Vorteil, dass die Einsatzmöglichkeiten der Sicherheitsmarkierungen durch die Integration des kodierten Bildes (Schriftzug, Logo ...) in eine Lackschicht nahezu unbegrenzt und vollkommen unabhängig von Farb- und Tonwerten der bedruckten Flächen sind und damit auch in Volltonflächen angeordnet werden können.
Zur Verbesserung des visuellen Eindruckes, zum Verschleißschutz und zur Verbesserung der Weiterverarbeitungseigenschaften werden Bedruckstoffe zunehmend lackiert. In besonderem Maße gilt dies für den Verpackungsdruck, dem Hauptanwendungsgebiet der vorgeschlagenen Lösung, da der mit einer Lackierung geschaffene Glanz Druckprodukte wertvoller erscheinen lässt und die Aufmerksamkeit für das Produkt steigert. Hochglänzende Flächen erscheinen auch farblich intensiver. Die Implementierung der Sicherheitsmarkierung in eine Lackschicht bedeutet somit praktisch keine Einschränkung oder einen zusätzlichen Realisierungsaufwand, da zumindest Verpackungsdruckmaschinen über Lackwerke (speziell ausgebildete Lackwerke für hohe Lackschichtdicken bis ca. 8 µm) oder zumindest Lackdruckwerke (als Lackwerk eingesetzte Druckwerke für geringere Lackschichtdicken) verfügen.

Die Erfindung soll an drei Ausführungsbeispielen näher erläutert werden. Die dazugehörigen Zeichnungen haben folgende Bedeutung:
- Figur 1: Bildkodierung mit einem Matt- und einem Glanzlack
- Figur 2: Bildkodierung mit zwei Lacken mit unterschiedlicher Oberflächenspannung
- Figur 3: Bildkodierung mit zwei Lacken mit unterschiedlichen Resorptionseigenschaften gegenüber einer Decklackschicht

Zur Kodierung des CIT-Bildes der Sicherheitsmarkierung werden erfindungsgemäß Glanz- bzw. Transparenzunterschiede innerhalb einer lackierten Fläche genutzt. Glanz ist ein Maß für die Rauhigkeit der Reflexionsfläche und für das an der Lackschichtoberfläche unter dem Ausfallswinkel reflektierte Licht. Glanz kennzeichnet die Reflexionseigenschaften einer Lackschichtoberfläche. Glänzende Oberflächen (Glanzlacke) weisen eine geringe Rauhigkeit auf und reflektieren fast das gesamte einfallende Licht in einer vom Reflexionswinkel vorgegebenen Richtung. Raue Oberflächen (Mattlacke) reflektieren einfallendes Licht diffus und erscheinen daher in einem vom Reflexionswinkel abweichenden Betrachtungswinkel heller als glänzende Oberflächen. Die sich aus den unterschiedlichen Reflexionseigenschaften ergebenden Helligkeits- bzw. Kontrastunterschiede zwischen glänzenden und matten Lackoberflächenbereichen werden erfindungsgemäß für die Kodierung und Dekodierung der CIT-Bilder genutzt.
Der prinzipiell gleiche Effekt ergibt sich bei Verwendung von Lacken mit unterschiedlicher Transparenz, nur findet bei weniger transparenten Lacken die Reflexion zusätzlich in der Lackschicht an den eingelagerten Lackpartikeln statt, was aber zu prinzipiell gleichen Reflexionseffekten wie eine raue Oberfläche führt. Die Ausführungsbeispiele sind daher in nicht einschränkender Weise nur auf Lacke mit unterschiedlichen Glanzgraden bezogen, wobei äquivalente Lösungen auch mit Lacken unterschiedlicher Transparenz möglich sind.
Einzelheiten, die die Kodierungsalgorithmen betreffen, sind nicht Gegenstand der vorgeschlagenen Lösung. Deshalb beschränkt sich die Erläuterung der erfindungsgemäßen Lösung auf die Möglichkeiten der Ausbildung von hoch auflösenden Glanzdifferenzen in einer Lackbeschichtung.

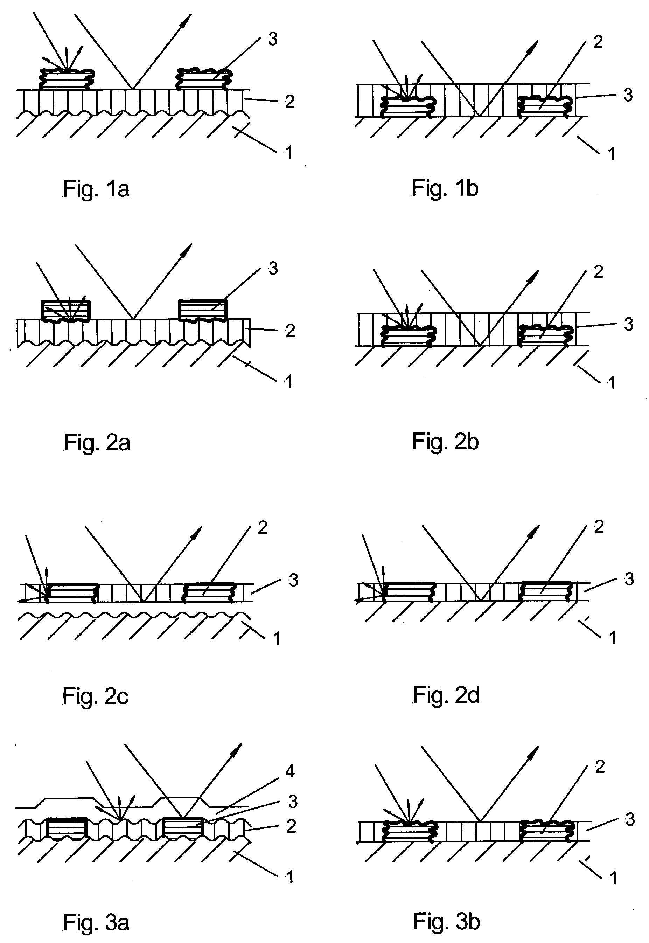

Da die in der Lackschicht "unsichtbar" zu implementierenden Bildelemente der Sicherheitsmarkierung eine Größe unterhalb des Auflösungsvermögens des menschlichen Auges, dh. kleiner als ca. 50 µm, aufweisen und daher ein Untergrund mit einer möglichst gleichmäßigen Oberfläche mit konstanter Rauhigkeit und konstantem Farbton vorteilhaft ist, sind die Sicherheitsmarkierungen bevorzugt in Druckbereichen anzuordnen, die einen vollflächigen Auftrag einer Druckfarbe erhalten. Dieser führt dazu, dass Ungleichmäßigkeiten der Bedruckstoffoberfläche überdeckt und konstante Trocknungs- oder Aushärtungsbedingungen für nachfolgende Lackaufträge geschaffen werden.
Zur Erzeugung der örtlich differenzierten Reflexionseigenschaften sind zumindest drei Varianten geeignet. Die erste Variante besteht im sequentiellen Auftrag zweier Lacke mit unterschiedlichem Glanzgrad (unterschiedlicher Transparenz). Die zweite und dritte Variante beruhen auf der gezielten Erzeugung von Rauhigkeiten durch physikalisch-chemische Reaktionen an den Grenzflächen zwischen unterschiedlichen Lacken.
Da für die erfindungsgemäße Kodierung der Hidden Images unterschiedliche Glanzgrade von Lacken, d.h. unterschiedliche Oberflächenrauigkeiten, genutzt werden, ist ein glatter Untergrund Vorraussetzung. Ist die Fläche, in der das Hidden Image angeordnet werden soll, bereits mit einer Glanzfarbe im Vollton grundiert, ist die zusätzliche Aufbringung einer Glanzlackschicht nicht erforderlich (Fig. 1b,2b,2d,3b). Andernfalls ist die Mattfarbe mit einem Glanzlack zu beschichten, der bei einzelnen Varianten der Imageerzeugung mit einem zweiten Lack in Wechselwirkung tritt (Fig.1 a,2a,2c,3a).

### Variante 1:

Den ersten Schritt zur Erzeugung der Sicherheitsmarkierung bei matter Volltongrundfarbe 1 bildet das Aufbringen mindestens einer vollflächigen Lackschicht 2 in einem Lackdruckwerk oder einem speziellen Lackwerk auf die mit der Sicherheitsmarkierung zu kennzeichnenden Fläche (Fig.1a). Dafür können Lacke aus den Lacksystemen öl- oder firnisbasierte Drucklacke, Hybridlacke mit UV-Lackanteilen oder UV-Lacke verwendet werden. Die Art des dafür eingesetzten Lackes hängt vom Druckauftrag, den Trocknungsbedingungen und dem gewünschten Erscheinungsbild der bedruckten Fläche ab.
In einem zweiten Schritt werden nur die kodierten Bildelemente der Sicherheitsmarkierung mit einer zweiten Lackschicht 3 mit geringerem Glanzgrad (Mattlack) aufgetragen. Da die Bild-Strukturen mit sehr hoher Auflösung (bis 2400 dpi, dh. ca. 10µm pro Bildpunkt) und hoher Genauigkeit übertragen werden müssen, erfolgt der Lackauftrag in einem Druckwerk unter Verwendung einer dafür geeigneten Lackdruckform. Entscheidend für die Qualität der Sicherheitsmarkierungen ist eine schnelle Trocknung oder zumindest eine hohe Viskosität der Lackschichten 2,3, um ein Verlaufen der Bildkonturen zu verhindern. Kantenunschärfen reduzieren den Informationsgehalt der Sicherheitsmarkierungen. Eine schnelle Trocknung kann durch die Verwendung eines schnellhärtenden Lackes, wie z.B. eines UV-Lackes, oder durch Zwischentrocknung zwischen den Lackaufträgen gewährleistet werden.
Die zweite Lackschicht 3 muss einen zumindest geringfügigen Glanzunterschied zur ersten Lackschicht 2 liefern. Die Glanzdifferenzen bewirken scheinbare Helligkeitsunterschiede zwischen der Grundfläche und den mit der zweiten Lackschicht 3 aufgedruckten Lackstrukturen durch unterschiedliche Anteile diffuser Reflexion, die durch eine Entcodierlinse zu einem sichtbaren Bild "zusammengesetzt" werden, das als hellere oder dunklere Struktur auf dem Untergrund der Grundfarbe hervortritt.
Zum Schutz der Sicherheitsmarkierung vor Verschleiß kann ein neutraler glänzender Schutz- oder Decklackschicht 4 mit hoher Transparenz vollflächig in einem dritten Schritt aufgebracht werden.
Gute Ergebnisse werden mit einem Glanz-Öldrucklack (z.B. Glanzüberdruckfirnis) als erste Lackschicht 2 und einem Matt-Öldrucklack für die Übertragung des CIT-Bildes erzielt. Als Decklackschicht 4 kommt Dispersionslack (wasserbasiert), UV-Drucklack (Auftrag in einem als Lackwerk verwendeten Druckwerk) oder UV-Lack (Auftrag in einem gesonderten Lackwerk mit hoher Schichtdicke) zum Einsatz.
Es ist ebenso möglich, in umgekehrter Weise auf einer glänzenden ersten Lackschicht 2 eine matte Lackschicht 3 flächig aufzutragen, die die CIT-Bildelemente ausspart, so dass an diesen Stellen die glänzende Grundschicht sichtbar bleibt.
Im Rahmen der Erfindung sind weitere Varianten unter Einbeziehung einer bereits vorhandenen glänzenden Volltongrundfarbe 1 anstelle einer Lackgrundschicht möglich. Zur Aufbringung des CIT-Bildes genügt dann eine Lackschicht 2 mit der CIT-Bildinformatiort, die einen geringeren Glanzgrad als die Volltongrundfarbe 1 aufweist (Fig. 1 b). Die Lackschicht 3 dient bei dieser Variante dem Verschleißschutz.

### Variante 2 :

Bei der in Fig.2a gezeigten Variante erfolgt zunächst der erste vollflächige Lackauftrag (erste Lackschicht 2) auf die matte Volltongrundfarbe 1. Bildelemente mit abweichenden Reflexionseigenschaften werden bei dieser Variante durch einen sequentiellen und örtlich differenzierten Auftrag von zwei Lackschichten 2,3 mit unterschiedlicher Oberflächenspannung, deren Kontaktflächen von den Glanzgraden der Lacke abweichende Glanzgrade ausbilden, d. h. erst nachträglich durch die Wechselwirkung der zweiten Lackschicht 3 mit der ersten, als Grundlack aufgetragenen Lackschicht 2 erzeugt. Dabei wird der bekannte Effekt genutzt, das an der Grenzfläche zwischen zwei nicht ausgehärteten Lackschichten mit geringfügig unterschiedlichen Oberflächenspannungen Verformungen auftreten bzw. im Falle von zwei Lacken aus unterschiedlichen Lacksystemen zusätzlich Granulierungs- oder Mattierungseffekte an der Grenzfläche auftreten, die zu einer diffusen Lichtreflexion an der Grenzfläche führen. Als Ursache kommen Querspannungen und physikalisch-chemische Reaktionen an der Kontaktfläche in Betracht, die als Benetzungsstörungen zusammengefasst werden. Die diffuse Lichtreflexion erfolgt hier abweichend von der ersten Variante nicht bereits an der Oberfläche eines Matt-Lackes, sondern erst an der rauen Grenzfläche zur darunter befindlichen ersten Lackschicht 2. Für diese Variante ist die Verwendung zweier Glanzlacke erforderlich.
Zunächst wird ein Lackschicht 2, z. B. ein Öldrucklack, vollflächig in einem Druckwerk aufgetragen und zwischengetrocknet. Die Bildelemente der Sicherheitsmarkierung werden in einem der folgenden Druckwerke mit einer das codierte Bild der Sicherheitsmarkierung enthaltenden Lackdruckform auf die erste Lackschicht 2 aufgedruckt. Dafür ist ebenfalls eine Lackschicht 3 mit anderer Oberflächenspannung oder aus einem anderen Lacksystem geeignet. Die genannten Grenzflächeneffekte führen zu Veränderungen an der Grenzfläche der noch fließfähigen zweiten Lackschicht 3, die eine Grenzflächenrauhigkeit ausbilden und durch den anschließenden Trocknungsprozess fixiert werden. Die von der zweiten Lackschicht 3 bedeckte Lackoberfläche 2 erscheint somit makroskopisch als matte Fläche und tritt daher als hellere Struktur nach der Dekodierung hervor.
Eine Verschleißschutzlackierung mit einem Decklackschicht 4, z. B. einem UV-Drucklack, ist möglich.
Analog zu Variante 1 ist im Falle einer glänzenden Volltongrundfarbe 1 das Aufbringen einer Lackschicht 2 mit der CIT-Bildinformation und die anschließende vollflächige Beschichtung mit einer zweiten Lackschicht 3 möglich, wobei die zweite Lackschicht 3 eine andere Oberflächenspannung als die erste Lackschicht 2 besitzen muss, damit an den Grenzflächen zur ersten Lackschicht 2 Rauhigkeiten und damit die gewünschte diffuse Reflexion auftritt (Fig. 2b).
Werden in weiteren Ausgestaltungen der Varianten gem. Fig.2a und 2b beide Lackschichten 2,3 mit gleicher Schichtdicke und entsprechend der CIT-Bildinformation gerastert aufgetragen, treten die Grenzflächenrauhigkeiten nur an den senkrechten Grenzflächen auf, wodurch sich zusätzliche Möglichkeiten für eine 3D-CIT-Bildkodierung ergeben (Fig.2c und 2d).

### Variante 3:

Vergleichbar mit Variante 2 wird ein weiterer Grenzflächeneffekt genutzt, der aus der DE 100 57 641 A1, DE 100 57 642 A1 oder DE 100 57 643 A1 bekannt ist. Die gewünschte Grenzflächenrauhigkeit und diffuse Reflexion wird hierbei durch die zumindest partielle Resorption eines Lackes in einem zweiten Lack eines anderen Lacksystems erreicht. Wird beispielsweise ein UV-Lack auf einen nicht getrockneten Öldrucklack aufgetragen, werden die glanzbestimmenden Lackbestandteile des UV-Lackes vom Öldrucklack resorbiert, wodurch eine Rauhigkeit an der Grenzfläche entsteht, die einfallendes Licht diffus reflektiert.
Gemäß Fig.3a wird die Sicherheitsmarkierung dadurch erzeugt, dass zunächst eine erste Lackschicht 2 mit Öldrucklack aufgetragen wird. Danach werden die CIT-Bildelemente mit einer schnell trocknenden /härtenden Lackschicht 3, beispielsweise Hybridlack, mittels Druckform auf die erste Lackschicht 2 aufgetragen. Während eines anschließenden Durchlaufes des Bedruckstoffes durch einen UV-Trockner wird der Hybridlack gehärtet, während der Öldrucklack nur einen geringen Trocknungsimpuls durch die unvermeidbare Wärmestrahlung des UV-Trockners erhält. Abschließend erfolgt ein vollflächiger Auftrag eines UV-Decklackes. Die frisch aufgetragene Decklackschicht 4 wird in den Oberflächenbereichen des noch nicht getrockneten Öldrucklackes von diesem zumindest partiell resorbiert, d.h. die Decklackschicht 4 wird von der Öldrucklackschicht aufgenommen, wobei sich eine Oberflächenrauhigkeit ausbildet. Im Bereich des ausgehärteten Hybridlackes erfolgt keine Resorption, die Decklackschicht 4 reagiert nicht mit dem Untergrund und bleibt glänzend. Die Sicherheitsmarkierung erscheint somit als glänzende und daher dunklere Kontur auf dem matten Hintergrund der resorbierten Decklackschicht 4. Eine analoge Variante zur Erzeugung der Sicherheitsmarkierung ist durch die Verwendung eines Hybridlackes als flächige erste Lackschicht 2, UV-Trocknung, Druck der CIT-Bildelemente mit Öldrucklack und Überzug mit einer UV-Decklackschicht 4, der dann nur im Bereich der CIT-Bildelemente resorbiert wird und matte CIT-Bildelemente erzeugt, möglich.
Im Falle der Grundierung mit einer glänzenden Volltongrundfarbe 1 kann eine erste Lackschicht 2 mit dem CIT-Bild aufgetragen werden, der mit einer zweiten Lackschicht 3 eines anderen Lacksystems vollflächig beschichtet wird. Die erste Lackschicht 2 resorbiert die zweite Lackschicht 3 und bildet somit Bildpunkte mit rauer Oberfläche aus (Fig.3b). Die zweite Lackschicht 3 dient hierbei gleichzeitig als vor Verschleiß schützender Decklack. Die genannten Varianten können in mehrlagige Lackschichten eingebaut werden, so dass mehrere unterschiedliche Hidden Images übereinander in eine Lackbeschichtung eingebaut werden können, die mit unterschiedlichen Decodierlinsen sichtbar gemacht werden können.
Die Lackbeschichtungen mit den integrierten CIT-Bildern können sowohl inline als auch offline in einer gesonderten Doppel-Lackmaschine erfolgen.
Zur Realisierung der Lackbeschichtung mit integrierten Sicherheitsmarkierungen nach der ersten Variante sollten das Lackwerk für die flächige erste Lackbeschichtung 2 und das Lackdruckwerk für die Aufbringung der zweiten Lackschicht 3 nicht unmittelbar aufeinander folgen, um eine ausreichende Zwischentrocknung zur Gewährleistung der erforderlichen Konturenschärfe der CIT-Bildelemente zu sichern. Beispielsweise könnten in einem ersten und zweiten Druckwerk Volltongrundfarben 1 für einen Verpackungsdruck aufgedruckt werden, in einem dritten Werk, dem Lackwerk, die erste Lackschicht 2, in einem vierten Druckwerk eine weitere Farbe und in einem fünften Werk, dem Lackdruckwerk, die zweite Lackschicht 3 mit dem CIT-Bild. In einem sechsten Druckwerk kann eine abschließende Decklackschicht 4 mit UV-Lack erfolgen. Nach dem Auftragen der ersten Lackschicht 2 ist eine Zwischentrocknung mittels IR-Trockner vorteilhaft oder alternativ die Anordnung zusätzlicher Farbwerke zur Erhöhung der Trocknungszeit.
In einer für die Inline-Lackierung gemäß Variante 2 geeigneten Druckmaschine ist eine Zwischentrocknung zwischen den Lackaufträgen nur insoweit erforderlich, dass kein Verlaufen der CIT-Bildelemente der zweiten Lackschicht 3 in der ersten Lackschicht 2 auftritt. Da eine Grenzflächenreaktion erfolgen soll, sind gewisse Restfeuchten oder eine bestimmte Viskosität der ersten Lackschicht 2 erforderlich, die von den jeweils verwendeten Lacken abhängen. Bei schnelltrocknender Lackschicht 2 ist daher die Anordnung eines oder mehrerer Druckwerke zwischen den die Lackschichten aufbringenden Druck- bzw. Lackwerken nicht vorteilhaft.
Gemäß der dritten Variante ist die physikalische Resorptionsfähigkeit z.B. einer Öldrucklackschicht eine wesentliche Voraussetzung, so dass eine fortgeschrittene Trocknung bis zum Auftrag der Decklackschicht 4 zu verhindern ist. Um dennoch die Konturenschärfe der CIT-Bildelemente zu gewährleisten, sind hochviskose Lacke erforderlich.
Das Anwendungsgebiet von Sicherheitsmarkierungen wird aufgrund des Wegfalles der Bindung an Farbflächenraster bedeutend erweitert. Die Art der Grundfarben ist nahezu unbegrenzt. Auch Sonderfarben sind als Untergrund geeignet. Darüber hinaus entfällt die Bindung an bestimmte Druckarten. Sieb-, Flexo-, Tief- und Offsetdruck sind möglich. Ebenso ist das Spektrum an geeigneten Lacken sehr umfangreich: Öldrucklacke, Hybridlacke, UV-Drucklacke oder UV-Lacke sind einsetzbar. Dadurch erschließt sich den CIT-Sicherheitsmarkierungen ein breites Anwendungsgebiet, beispielsweise sind CD, Kreditkarten, Briefmarken, Zahlungsmittel und Verpackungen aller Art erfindungsgemäß gegen Nachahmungen schützbar.

### Aufstellung der verwendeten Bezugszeichen

- 1: Volltongrundfarbe
- 2: erste Lackschicht, Grundlack
- 3: zweite Lackschicht
- 4: Decklackschicht

## Patentansprüche

1. Sicherheitsmarkierung nach dem CIT-Prinzip für bedruckte Flächen,
wobei die Sicherheitsmarkierung ein zwei- oder dreidimensionales Bild ist, dessen Bildelemente eine für das menschliche Auge nicht wahrnehmbare Größe und Anordnung aufweisen und nur mit Hilfe optischer Decoder sichtbar sind,
wobei die vom Farbton und Tonwert der bedruckten Fläche unabhängigen kodierten Bildelemente durch örtlich unterschiedliche Reflexionseigenschaften mindestens zweier unterschiedlicher eine Lackbeschichtung bildender Lackschichten (2, 3) kodiert werden, die sich in ihrem Glanzgrad oder ihrer Transparenz voneinander unterscheiden oder an ihren Grenzflächen miteinander durch physikalisch-chemische Reaktionen eine Oberflächenrauhigkeit ausbilden.

2. Verfahren zur Herstellung einer Sicherheitsmarkierung nach dem CIT-Prinzip für bedruckbare Oberflächen,
wobei die Sicherheitsmarkierung ein zwei- oder dreidimensionales Bild ist, dessen Bildelemente eine für das menschliche Auge nicht wahrnehmbare Größe und Anordnung aufweisen und nur mit Hilfe optischer Decoder sichtbar sind,
mit
- einer Herstellung einer die kodierte Anordnung von Bildelementen der Sicherheitsmarkierung enthaltenden Lackdruckform und
- einem Aufbringen mindestens einer ersten Lackschicht (2) auf eine glänzende Volltongrundfarbe (1) oder
- einem Aufbringen einer ersten und zweiten Lackschicht (2, 3) auf die mit der Sicherheitsmarkierung zu kennzeichnende Fläche, wobei eine der Lackschichten (2, 3) die kodierte Anordnung der Bildelemente der Sicherheitsmarkierung enthält und in einem Druckwerk mit der Lackdruckform aufgebracht wird und die andere Lackschicht (3, 2) flächig aufgetragen wird,
- wobei die kodierten Bildelemente durch örtlich unterschiedliche Reflexionseigenschaften der Lackschicht (2) und der glänzenden Volltongrundfarbe (1) kodiert werden, die sich in ihrem Glanzgrad voneinander unterscheiden oder wobei die Lackschichten (2, 3) selbst unterschiedliche Reflexionseigenschaften aufweisen oder durch ihr Zusammenwirken oder durch das Zusammenwirken einer der Lackschichten (2, 3) mit einer weiteren Lackschicht (4) an den Grenzflächen örtlich unterschiedliche Reflexionseigenschaften ausbilden.

3. Verfahren nach Anspruch 2,
wobei die Kodierung der Sicherheitsmarkierung erfolgt durch Auftragen einer die Bildelemente der Sicherheitsmarkierung enthaltenden ersten Lackschicht (2) auf eine glänzende Volltongrundfarbe (1), wobei die erste Lackschicht (2) einen geringeren Glanzgrad als die Volltongrundfarbe (1) aufweist.

4. Verfahren nach Anspruch 3,
wobei eine zweite Lackschicht (3) als Verschleißschutz aufgetragen wird.

5. Verfahren nach Anspruch 2,
wobei die Kodierung der Sicherheitsmarkierung erfolgt durch Auftragen einer die Bildelemente der Sicherheitsmarkierung enthaltenden ersten Lackschicht (2) auf eine glänzende Volltongrundfarbe (1), wobei die zweite Lackschicht (3) eine andere Oberflächenspannung als die erste Lackschicht (2) aufweist und wobei Grenzflächen mit diffuser Lichtreflexion entstehen.

6. Verfahren nach Anspruch 2,
wobei die Kodierung der Sicherheitsmarkierung erfolgt mittels sequentiellem Auftragen einer flächigen ersten Lackschicht (2) und einer die Bildelemente der Sicherheitsmarkierung enthaltenden zweiten Lackschicht (3) auf die erste Lackschicht (2), wobei die zweite Lackschicht (3) einen geringeren Glanzgrad oder eine geringere Transparenz als die erste Lackschicht (2) aufweist.

7. Verfahren nach Anspruch 2,
wobei die Kodierung der Sicherheitsmarkierung erfolgt mittels sequentiellem Auftragen einer die Bildelemente der Sicherheitsmarkierung enthaltenden ersten Lackschicht (2) und einer flächigen, auch die erste Lackschicht (2) überdeckenden zweiten Lackschicht (3), wobei die zweite Lackschicht (3) einen höheren Glanzgrad oder eine höhere Transparenz als die erste Lackschicht (2) aufweist.

8. Verfahren nach Anspruch 2,
wobei die Kodierung der Sicherheitsmarkierung erfolgt mittels sequentiellem Auftragen einer flächigen ersten Lackschicht (2) und einer die Bildelemente der Sicherheitsmarkierung enthaltenden zweiten Lackschicht (3) auf die erste Lackschicht (2), wobei die Grenzflächen zwischen der ersten und der zweiten Lackschicht (2, 3) infolge von Benetzungsstörungen von den Reflexionseigenschaften der ersten Lackschicht (2) abweichende Reflexionseigenschaften ausbilden.

9. Verfahren nach Anspruch 2,
wobei die Kodierung der Sicherheitsmarkierung erfolgt mittels sequentiellem Auftragen einer die Bildelemente der Sicherheitsmarkierung enthaltenden ersten Lackschicht (2) und einer flächigen, auch die erste Lackschicht (2) überdeckenden zweiten Lackschicht (3), wobei die Grenzflächen zwischen der ersten und der zweiten Lackschicht (2, 3) infolge von Benetzungsstörungen von den Reflexionseigenschaften der zweiten Lackschicht (3) abweichende Reflexionseigenschaften ausbilden.

10. Verfahren nach Anspruch 8 oder 9,
wobei zwei Lackschichten (2, 3) mit unterschiedlicher Oberflächenspannung aufgetragen werden, wobei Grenzflächen mit diffuser Lichtreflexion entstehen.

11. Verfahren nach Anspruch 2,
wobei die Kodierung der Sicherheitsmarkierung erfolgt durch entsprechend der Anordnung der Bildelemente gerasterten Auftrag zweier Lackschichten (2, 3) mit gleicher Schichtdicke, wobei durch Benetzungsstörungen oder Resorption an den senkrechten Grenzflächen zwischen den Lackrasterpunkten beider Lackschichten (2, 3) eine Rauhigkeitserhöhung eintritt.

12. Verfahren nach Anspruch 11,
wobei das Auftragen der zwei Lackschichten (2, 3) auf eine glänzende Volltongrundfarbe (1) oder auf eine auf einer matten Volltongrundfarbe (1) aufgebrachte Glanzlackschicht erfolgt.

13. Verfahren nach Anspruch 2,
wobei die Kodierung der Sicherheitsmarkierung erfolgt mittels sequentiellem Auftragen einer flächigen ersten Lackschicht (2) und einer die Bildelemente der Sicherheitsmarkierung enthaltenden zweiten Lackschicht (3) auf die erste Lackschicht (2), wobei nur die erste oder nur die zweite Lackschicht (2, 3) eine flächig auf beide Lackschichten (2, 3) aufgetragene Decklackschicht (4) zumindest teilweise resorbiert und die Resorptionsflächen von den Reflexionseigenschaften der Lackschichten (2, 3) abweichende Reflexionseigenschaften ausbilden.

14. Verfahren nach Anspruch 2,
wobei die Kodierung der Sicherheitsmarkierung erfolgt mittels sequentiellem Auftragen einer die Bildelemente der Sicherheitsmarkierung enthaltenden ersten Lackschicht (2) und einer flächigen, auch die erste Lackschicht (2) überdeckenden zweiten Lackschicht (3), wobei die erste Lackschicht (2) die zweite Lackschicht (3) zumindest teilweise resorbiert und die Resorptionsflächen von den Reflexionseigenschaften der Lackschichten (2, 3) abweichende Reflexionseigenschaften ausbilden.

15. Verfahren nach Anspruch 13 oder 14,
wobei ein Auftragen von eingefärbten oder farblosen Lacken aus verschiedenen Lacksystemen und mit unterschiedlichen Oberflächenspannungen erfolgt, wobei Resorptionsflächen mit diffuser Lichtreflexion entstehen.

16. Sicherheitsmarkierung nach dem CIT-Prinzip für bedruckte Flächen,
wobei die Sicherheitsmarkierung ein zwei- oder dreidimensionales Bild ist, dessen Bildelemente eine für das menschliche Auge nicht wahrnehmbare Größe und Anordnung aufweisen und nur mit Hilfe optischer Decoder sichtbar sind,
wobei die vom Farbton und Tonwert der bedruckten Fläche unabhängigen kodierten Bildelemente durch örtlich unterschiedliche Reflexionseigenschaften einer Lackschicht (2) und einer glänzenden Volltongrundfarbe (1) kodiert werden, die sich in ihrem Glanzgrad voneinander unterscheiden.

## Claims

1. A safety marking according to the CIT principle for printed surfaces, wherein the safety marking is a two-dimensional or three-dimensional image, the image elements of which have a size and layout imperceptible to the human eye and are only visible with the help of an optical decoder, wherein the image elements coded independently of the color hue and the tone value of the printed surface are coded by locally different reflection properties of at least two different lacquer layers (2, 3) forming a lacquer coating, which differ in their degree of gloss or their transparency from each other or form together a surface roughness on their boundary surfaces by physico-chemical reactions.

2. A method for producing a safety marking according to the CIT principle for printable surfaces,
wherein the safety marking is a two-dimensional or three-dimensional image, the image elements of which have a size and layout imperceptible to the human eye and are only visible with the help of an optical decoder,
with
- a production of a lacquer printed form containing the coded layout of image elements of the safety marking and
- an application of at least one first lacquer layer (2) on a glossy full tone basic color (1) or an application of a first and second lacquer layer (2, 3) on the surface to be **characterized by** the safety marking, one of the lacquer layers (2, 3) containing the coded layout of image elements of the safety marking and being applied in a printing mechanism with the lacquer printed form and the other lacquer layer (3, 2) being applied flatly,
- wherein the coded image elements are coded by locally different reflection properties of the lacquer layer (2) and of the glossy full tone basic color (1) which differ from each other in their degree of gloss or wherein the lacquer layers (2, 3) have themselves different reflection properties or form locally different reflection properties by their interaction or by the interaction of one of the lacquer layers (2, 3) with a further lacquer layer (4) on the boundary surfaces.

3. The method according to claim 2,
wherein the coding of the safety marking takes place by applying a first lacquer layer (2) containing the image elements of the safety marking on a glossy full tone basic color (1), wherein the first lacquer layer has a lower degree of gloss than the full tone basic color (1).

4. The method according to claim 3,
wherein a second lacquer layer (3) is applied as a wear protection.

5. The method according to claim 2,
wherein the coding of the safety marking takes place by applying a first lacquer layer (2) containing the image elements of the safety marking on a glossy full tone basic color (1), wherein the second lacquer layer (3) has a surface tension other than the first lacquer layer (2) and wherein boundary surfaces form with diffuse light reflection.

6. The method according to claim 2,
wherein the coding of the safety marking takes place by means of sequential application of a planar first lacquer layer (2) and of a second lacquer layer (3) containing the image elements of the safety marking on the first lacquer layer (2), the second layer (3) having a lower degree of gloss or lower transparency than the first lacquer layer (2).

7. The method according to claim 2,
wherein the coding of the safety marking takes place by means of sequential application of a first lacquer layer (2) containing the image elements of the safety marking and a planar second lacquer layer (3) also covering the first lacquer layer (2), the second layer (3) having a higher degree of gloss or higher transparency than the first lacquer layer (2).

8. The method according to claim 2,
wherein the coding of the safety marking takes place by means of sequential application of a planar first lacquer layer (2) and a second lacquer layer (3) containing the image elements of the safety marking on the first lacquer layer (2), wherein the boundary surfaces between the first and second lacquer layer (2, 3) as a result of wetting perturbations form reflection properties deviating from the reflection properties of the first lacquer layer (2).

9. The method according to claim 2,
wherein the coding of the safety marking takes place by means of sequential application of a first lacquer layer (2) containing the image elements of the safety marking and a planar also second lacquer layer (3) covering the first lacquer layer (2), wherein the boundary surfaces between the first and second lacquer layer (2, 3) as a result of wetting perturbations form reflection properties deviating from the reflection properties of the second lacquer layer (3).

10. The method according to claim 8 or 9,
wherein two lacquer layers (2, 3) with different surface tension are applied, wherein boundary surfaces form with diffuse light reflection.

11. The method according to claim 2,
wherein the coding of the safety marking takes place by screened application corresponding to the layout of the image elements of second lacquer layers (2, 3) with same layer thickness, wherein a roughness increase occurs by wetting perturbations or resorption on the vertical boundary surfaces between the lacquer screen dots of both lacquer layers (2, 3).

12. The method according to claim 11,
wherein the application of the two lacquer layers (2, 3) takes place on a glossy full tone basic color (1) or on a glossy lacquer layer applied on a matt full tone basic color (1).

13. The method according to claim 2,
wherein the coding of the safety marking takes place by means of sequential application of a planar first lacquer layer (2) and of a second lacquer layer (3) containing the image elements of the safety marking on the first lacquer layer (2), wherein only the first or only the second lacquer layer (2, 3) forms a planar top lacquer layer (4) applied on both lacquer layers (2, 3), at least partly resorbed, and the resorption surfaces form reflection properties deviating from the reflection properties of the lacquer layers (2, 3).

14. The method according to claim 2,
wherein the coding of the safety marking takes place by means of sequential application of a first lacquer layer (2) containing the image elements of the safety marking and a planar also second lacquer layer (3) covering the first lacquer layer (2), wherein the first lacquer layer (2) at least partly resorbed the second lacquer layer (3), and the resorption surfaces form reflection properties deviating from the reflection properties of the lacquer layers (2, 3).

15. The method according to claim 13 or 14,
wherein an application of colored or colorless lacquers from different lacquer systems and with different surface tensions takes place, resorption surfaces forming with diffuse light reflection.

16. A safety marking according to the CIT principle for printed surfaces,
wherein the safety marking is a two- or three-dimensional image, the image elements of which have a size and layout imperceptible to the human eye and are only visible with the help of an optical decoder,
wherein the image elements coded independently of the color hue and tone value of the printed surface are coded by the locally different reflection properties of a lacquer layer (2) or a full tone basic color (1), which differ in their degree of gloss from each other.

## Revendications

1. Marquage de sécurité conforme au principe CIT pour des surfaces imprimées, où le marquage de sécurité est une image bidimensionnelle ou tridimensionnelle dont les éléments d'image présentent une grandeur et un agencement non perceptibles par l'oeil humain et ne sont visibles qu'au moyen de décodeurs optiques,
où les éléments d'image codés indépendamment de la couleur et de la valeur tonale de la surface imprimée sont codés par des propriétés de réflexion localement différenciées d'au moins deux couches de vernis (2, 3) différentes formant un revêtement de vernis, lesquelles se distinguent l'une de l'autre par leur degré de brillance ou leur transparence ou réalisent ensemble une rugosité de surface par réactions physico-chimiques sur leurs interfaces.

2. Procédé de production d'un marquage de sécurité conforme au principe CIT pour des surfaces imprimables,
où le marquage de sécurité est une image bidimensionnelle ou tridimensionnelle dont les éléments d'image présentent une grandeur et un agencement non perceptibles par l'oeil humain et ne sont visibles qu'au moyen de décodeurs optiques,
comprenant
- la production d'une forme d'impression au vernis contenant l'agencement codé d'éléments d'image du marquage de sécurité, et
- l'application d'au moins une première couche de vernis (2) sur une couleur primaire homogène brillante (1) ou l'application d'une première et d'une deuxième couches de vernis (2, 3) sur la surface à pourvoir du marquage de sécurité, une des couches de vernis (2, 3) contenant l'agencement codé des éléments d'image du marquage de sécurité et étant appliquée dans un groupe d'impression avec la forme d'impression au vernis et l'autre couche de vernis (3, 2) étant appliquée en nappe,
- où les éléments d'image codés sont codés par des propriétés de réflexion localement différenciées de la couche de vernis (2) et de la couleur primaire homogène brillante (1), lesquelles se distinguent l'une de l'autre par leur degré de brillance, ou bien où les couches de vernis (2, 3) elles-mêmes présentent des propriétés de réflexion différenciées ou réalisent des propriétés de réflexion localement différenciées par leur coopération ou par coopération d'une des couches de vernis (2, 3) avec une autre couche de vernis (4) sur les interfaces.

3. Procédé selon la revendication 2,
où le codage du marquage de sécurité est effectué par application d'une première couche de vernis (2) contenant les éléments d'image du marquage de sécurité sur une couleur primaire homogène brillante (1), la première couche de vernis (2) ayant un degré de brillance inférieur à celui de la couleur primaire homogène (1).

4. Procédé selon la revendication 3,
où une deuxième couche de vernis (3) est appliquée en tant que protection contre l'usure.

5. Procédé selon la revendication 2,
où le codage du marquage de sécurité est effectué par application d'une première couche de vernis (2) contenant les éléments d'image du marquage de sécurité sur une couleur primaire homogène brillante (1), la deuxième couche de vernis (3) présentant une tension de surface différente de celle de la première couche de vernis (2) et des interfaces à réflexion lumineuse diffuse étant formées.

6. Procédé selon la revendication 2,
où le codage du marquage de sécurité est effectué par application séquentielle d'une première couche de vernis (2) en nappe et d'une deuxième couche de vernis (3) contenant les éléments d'image du marquage de sécurité sur la première couche de vernis (2), la deuxième couche de vernis (3) ayant un degré de brillance ou une transparence inférieurs à ceux de la première couche de vernis (2).

7. Procédé selon la revendication 2,
où le codage du marquage de sécurité est effectué par application séquentielle d'une première couche de vernis (2) contenant les éléments d'image du marquage de sécurité et d'une deuxième couche de vernis (3) en nappe recouvrant également la première couche de vernis (2), la deuxième couche de vernis (3) ayant un degré de brillance ou une transparence supérieurs à ceux de la première couche de vernis (2).

8. Procédé selon la revendication 2,
où le codage du marquage de sécurité est effectué par application séquentielle d'une première couche de vernis (2) en nappe et d'une deuxième couche de vernis (3) contenant les éléments d'image du marquage de sécurité sur la première couche de vernis (2), les interfaces entre la première et la deuxième couches de vernis (2, 3) réalisant des propriétés de réflexion différenciées des propriétés de réflexion de la première couche de vernis (2) en raison de problèmes de mouillage.

9. Procédé selon la revendication 2,
où le codage du marquage de sécurité est effectué par application séquentielle d'une première couche de vernis (2) contenant les éléments d'image du marquage de sécurité et d'une deuxième couche de vernis (3) en nappe recouvrant également la première couche de vernis (2), les interfaces entre la première et la deuxième couches de vernis (2, 3) réalisant des propriétés de réflexion différenciées des propriétés de réflexion de la deuxième couche de vernis (3) en raison de problèmes de mouillage.

10. Procédé selon la revendication 8 ou 9,
où deux couches de vernis (2, 3) à tensions de surface différenciées sont appliquées, des interfaces à réflexion lumineuse diffuse étant formées.

11. Procédé selon la revendication 2,
où le codage du marquage de sécurité est effectué par application, tramée en fonction de l'agencement des éléments d'image, de deux couches de vernis (2, 3) de même épaisseur, un accroissement de la rugosité étant provoqué par des problèmes de mouillage ou par résorption sur les interfaces verticales entre les points de trame des deux couches de vernis (2, 3).

12. Procédé selon la revendication 11,
où l'application des deux couches de vernis (2, 3) est effectuée sur une couleur primaire homogène brillante (1) ou sur une couche de vernis brillante appliquée sur une couleur primaire homogène mate (1).

13. Procédé selon la revendication 2,
où le codage du marquage de sécurité est effectué par application séquentielle d'une première couche de vernis (2) en nappe et d'une deuxième couche de vernis (3) contenant les éléments d'image du marquage de sécurité sur la première couche de vernis (2), seule la première ou seule la deuxième couche de vernis (2, 3) résorbant au moins partiellement une couche de vernis de couverture (4) appliquée en nappe sur les deux couches de vernis (2, 3) et les surfaces de résorption réalisant des propriétés de réflexion différenciées des propriétés de réflexion des couches de vernis (2, 3).

14. Procédé selon la revendication 2,
où le codage du marquage de sécurité est effectué par application séquentielle d'une première couche de vernis (2) contenant les éléments d'image du marquage de sécurité et d'une deuxième couche de vernis (3) en nappe recouvrant également la première couche de vernis (2), la première couche de vernis (2) résorbant au moins partiellement la deuxième couche de vernis (3) et les surfaces de résorption réalisant des propriétés de réflexion différenciées des propriétés de réflexion des couches de vernis (2, 3).

15. Procédé selon la revendication 13 ou 14,
où est effectuée une application de vernis teintés ou incolores de différents systèmes de vernis et avec des tensions de surface différenciées, des surfaces de résorption à réflexion lumineuse diffuse étant formées.

16. Marquage de sécurité conforme au principe CIT pour des surfaces imprimées,
où le marquage de sécurité est une image bidimensionnelle ou tridimensionnelle dont les éléments d'image présentent une grandeur et un agencement non perceptibles par l'oeil humain et ne sont visibles qu'au moyen de décodeurs optiques,
où les éléments d'image codés indépendamment de la couleur et de la valeur tonale de la surface imprimée sont codés par des propriétés de réflexion localement différenciées d'une couche de vernis (2) et d'une couleur primaire homogène brillante (1), lesquelles se distinguent l'une de l'autre par leur degré de brillance.
